# EUROPEAN PATENT SPECIFICATION

(11) **EP 0 773 266 B1**
(45) Date of publication and mention of the grant of the patent: **07.01.1999**
(21) Application number: 96117965.2
(22) Date of filing: 08.11.1996
(51) Int. Cl.: C09D 5/00, C09D 5/02, B27N 3/04

(54) **Paint coating for a sound absorbing substrate**
Anstrichmittel für schalldämpfende Substrate
Revêtement pour substrats absorbant les sons

(30) Priority: 09.11.1995 US 555386
(43) Date of publication of application: 14.05.1997
(73) Proprietor: Armstrong World Industries, Inc., Lancaster Pennsylvania 17604 (US)
(72) Inventor: Pape, James D., Columbia, PA 17512 (US); Sensenig, Darryl L., Mountville, PA 17554 (US)
(74) Representative: Finck, Dieter, Dr.Ing.

(56) References cited:
- EP-A- 0 761 776
- FR-A- 1 474 732
- DATABASE WPI Week 9624 Derwent Publications Ltd., London, GB; AN 96-321124 XP002053391 & CA 2 153 186 A (ARMSTRONG WORLD INDUSTRIES) , 25 February 1996

## Description

The invention relates to a sound absorbing product comprising a sound absorbing substrate, particularly an acoustical fiber-board, having a visual surface which is capable of absorbing sound with a noise reduction coefficient NCR (ASTM C423-90a) being equal to or greater than 65, and a surface layer on said visual surface consisting of directly applied paint or of an attached non woven scrim covered by applied paint.

Methods for obtaining high noise reduction coefficients (NRC) with acoustical fiberboards are well known. NRC values are secured by using ASTM test C423-90a to measure the NRC of a product. Fiberglass is known to be a good sound absorber since it has high porosity. It can be decorated with a surface layer of laminated fabrics or painted scrims requiring only a minimal openness in the surface layer for sound to pass through and be absorbed in the substrate.

To make a product with an acoustically high NRC of 65 or more using a wood or mineral fiberboard substrate, the board porosity must be high. Finish paint applied directly to the board also must not form a continuous film closing off the board surface. Normally this occurs thus lowering the NRC. A method generally used to increase the NRC is hole punching and surface perforations.

Attaining a high porosity and NRC of 65 or more is not easily accomplished with fiberboard without sacrificing other material properties such as strength and hardness.

If hole punching the fiberboard is needed to achieve the NRC of 65 or more, then a facing layer is necessary in order to make a plain, nonperforated surface visual. Porous nonwoven scrims are attached for this purpose. Again a special paint is necessary to cover the scrim to make it optically opaque. Opacity is needed to hide the holes yet it must be acoustically transparent.

Paints are generally designed and applied at sufficient rates to form a continuous film. Atomized paint droplets coalesce and normally flow, and wick on the substrate to spread over the surface forming a film. This same type of wicking and spreading occurs when painting porous scrims. Retaining acoustical transparency of the surface can be attained by applying small amounts of paint insufficient to form a film, but these small amounts are not optically opaque. Another method is to use a paint having minimal wicking and spreading characteristics. More paint can then be applied without closing off the surface. If hole perforations are needed to develop the desired NRC, these holes can be hidden by applying a porous nonwoven scrim to the board surface bridging the holes and then painted with an acoustically porous paint.

If a sanded and painted fiber-board without surface perforations and scrim is the construction, then the porosity of the paint layer must be equal or greater than the porosity of the board in order to retain the sound absorption properties of the board.

It is the object of the invention to provide a sound absorbing product as described in the first section of the specification having a high NRC with a plain, non-perforated visual surface.

This object is achieved by the sound absorbing product as described in the first section of the specification, wherein said paint consists substantially of latex, water and very small size inert filler particles equal to 325 mesh and finer (going through a sieve opening of 0,044 mm or smaller) which particles have a greater affinity to the water than for the visual surface of the substrate resulting in discrete and individual droplets of the applied paint making the surface layer optically opaque as well as discontinuous and acoustically transparent by having a minimum porosity of 15 to 23 m³/min/m² (50 to 75 ft³/min/ft²) and providing a plain fine textured product.

According to the invention a sound absorbing fiberboard can be provided with the paint coating by providing a fiberboard with a sound absorbing surface; preparing a paint coating with a high solid emulsion, small mesh inert particles added to the emulsion to form a highly filled suspension; and applying said paint coating to said sound absorbing surface to form an open or discontinuous coating that is acoustically transparent to sound and optically opaque.

According to this invention a plain, fine textured product is provided consisting of a wood or mineral fiber substrate having a high NRC of 65 and more and a surfacing that does not alter the substrate sound absorption characteristics. The surfacing described herein is intended to render a product having a plain surface without visible holes or surface perforations. This surface layer can be a directly applied paint or an attached painted nonwoven scrim. The critical characteristic of this surfacing is that it is acoustically transparent so that the sound can penetrate through the surface and be absorbed in the substrate.

The paint has restricted flow properties and minimized coalescence when applied, preferably with application rates of 324 to 650 g/m² (30 to 60 g/ft²), thus retaining discrete paint droplets. This is accomplished with a critically high solids/low liquid suspension ranging up to about 72% solids by weight which increases viscosity quickly with minimal water loss. The paint also has to have a greater affinity for itself than for the surface to which it is applied. Conventional fine particles going through a sieve opening of 0.044 mm or smaller (equal to 325 mesh and finer) is used with the paint while retaining a relatively low viscosity of about 3 to 9 Pa s (3000 to 9000 cps). Particles that can be used are limestone, glass beads, silica, perlite, etc. The fine particles cause the liquids and fine filler particles to hold to each other by surface tension. This prevents wikking of the droplets into the surface of the fiberboard or the scrim. The combination of the paint and scrim is a further aspect.

Since flow and coalescence of the paint droplets is minimal, the high solids coating according to the invention remains discontinuous allowing heavier application rates while retaining an openness essential for air and sound passage.

If desired, the porosity of the paint coating could be used to reduce the sound absorption of the fiberboard.

The products according to the invention have a plain, nonperforated surface visual consisting of a fiberboard substrate with or without a laminated porous nonwoven scrim and then a finished painted surface. The finish painted surface decorates or finishes the board, but remains acoustically transparent and retains the sound absorption properties of the fiberboard prior to painting. The fiberboard substrate is made to be porous or modified with hole perforations to cause it to be a good sound absorber. If the fiber-board substrate is sufficiently porous without hole perforations, then the sprayable, high solids, porous paint can be directly applied. If hole perforations are used to improve the sound absorption properties of the board substrate, then a porous, nonwoven scrim is attached and painted using the same high solids porous paint coating according to the invention. The painted scrim must be sufficiently optically opaque to hide the hole punched board, yet sufficiently open to render it acoustically transparent.

The invention is further described with reference to the accompanying drawings, in which
- Fig. 1: is a side view of a discontinuous paint coating on a porous fiberboard; and
- Fig. 2: is a sectional side view of a porous scrim and discontinuous paint coating on a porous perforated fiber-board.

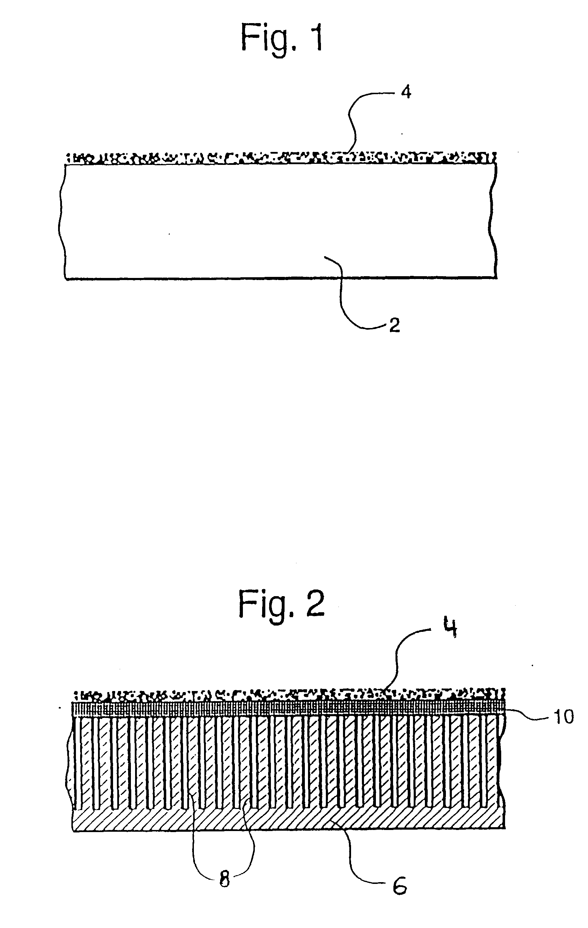

Fig. 1 shows a porous fiberboard substrate 2 with a discontinuous paint coating 4. Fig. 2 shows a hole perforated fiberboard substrate 6 with holes 8. A porous scrim 10 is used with a discontinuous paint coating 4.

The paint coating results from a paint having a high percent of solids permitting significantly higher application rates while retaining openness essential for good air and sound passage into a sound absorbing substrate. By blending extremely fine 325 mesh and finer, corresponding to a sieve opening of 0.044 mm limestone, silica, titanium dioxide, binder and water, unusual properties are secured when this suspension is spray applied. The silica filler is used to get the smooth surface and its size is 8 to 20 µm. This paint has minimal wicking and spreading characteristics. Minimal coalescence occurs retaining more discrete individual paint droplets. The liquid and fine fillers have a greater affinity for each other than for the surface to which they are applied. The factor minimizing coalescence of the paint droplets is the critically high solids, so that with minimal water loss the viscosity quickly increases thus setting the droplet and retaining discrete paint droplets. The use of fillers enables up to 72% by weight filled suspensions with viscosity ranging from about 3 to 9 Pa s (3000 to 9000 cps), permitting spray application via air atomized guns. The amount of fillers and known viscosity altering agents will permit other viscosity ranges higher or lower than above.

The preferred formulation for the paint is as follows:

| Ingredients | % By Weight | Range % |
|---|---|---|
| Binder: Acrylic latex, 50% solids by weight (Hycar, B. F. Goodrich) | 7.2 | 4 to 20 |
| | | |
| Filler: Slurry limestone, 70% solids by weight (Omyacarb, Omya Corp.) | 81.0 | 65 to 85 |
| | | |
| Silica Filler: 100% solids by weight (Celatom MW-27, Harcross Chemicals) | 7.0 | 4 to 10 |
| | | |
| Filler-Titanium dioxide 100% solids | 1.7 | 1 to 10 |
| | | |
| Liquid-Water | 3.1 | 2 to 8 |
| | $\overline{\text{100.00}}$ | $\overline{\text{100.00}}$ |

When this paint is spray applied, a smooth surface is formed. There is a limit to the amount of paint that can be applied while still retaining an openness for air and sound passage to the substrate. Higher application rates can be applied to materials which absorb water from the paint droplet more quickly. Rapid absorption minimizes flow and the unwanted formation of a continuous film. Paint application rates as high as 650 g/m² (60 g/ft²) in one coat can be applied to high water absorption wood or mineral fiberboard and very porous nonwoven scrim, while still retaining openness in the paint layer essential for good air and sound passage.

As the fiberboard or nonwoven scrim becomes less porous, the amount of paint has to be reduced since the water in the paint is not as readily absorbed and flooding occurs closing off the fiberboard surface. Between about 324 to 540 g/m² (30 to 50 g/ft²) of paint is generally ideal for retaining sufficient openness in the surface layer while not affecting the sound absorption properties of the substrate.

The above paint formulation can be used on fiberboard substrates made of fibers selected from the group of wood, mineral, glass and mixtures thereof. The paint has utility as a layer for good air and sound passage. Porosity to air flow is a measure of a material's ability to pass sound. Porosity as measured by the Frazier Airflow Test or its equivalent is necessary for sound passage. The paint coating should have a minimum porosity of not less than 15 to 23 m³/min/m² (50 to 75 ft³/min/ft²). This will then permit a substrate with a NRC rating of 65, having the above paint coating, to still have a NRC rating of 65. Lowering the paint coating porosity to about 7.6 m³/min/m² (25 ft³/min/ft²) would reduce the substrate NRC rating to less than 65.

To obtain structures of very high NRC (>75), one begins by using a very porous wood or mineral fiber substrate plus small holes punched therein, if needed, at approximately 2.15 holes/cm² (2000 holes/ft²). A cellulose paper of 43 to 54 g/m² (4 to 5 g/ft²), 380 pm (15 mils) thick and having a porosity of 35.7 m³/min/m² (117 ft³/min/ft²) is laminated to this substrate using a water based adhesive. The scrim is generally of a thickness of 380 pm (15 mils) or thicker. Other scrims that can be used are organic fiber, glass fiber, glass/organic fiber combinations and like materials. The weight of the scrims is generally 65 to 130 g/m² (6 to 12 g/ft²) and a porosity of 60 to 90 m³/min/m² (200 to 300 ft³/min/ft²). The cellulose scrim used (Ahlstrom Filtration, Inc., grade 1281) has fibers of a nominal length of 2.5 to 5.0 mm and nominal diameter of 30 to 50 pm. The holes are visible through the cellulose scrim. The high solids paint is spray applied using conventional air atomized spray guns. Up to 320 g/m² (30 g/ft²) of paint can be applied without a decrease in the NRC. The surfacing is optically opaque and acoustically transparent without visible surface perforations.

As the porosity of the paint layer or the paint/scrim combination layer decreases the ability of that layer to pass sound decreases. Each layer has utility in different situations. Less porous paint layers or paint/scrim layers can be compensated for increasing the absorption of the substrate. However, this is usually accompanied by a decrease in the strength and durability of the substrate since substrate density must be decreased to increase its absorption. The most efficient system overall is one in which the absorption loss due to the paint or paint/scrim is minimized. The paint/scrim porosity should not be lower than 20 m³/min/m² (65 ft³/min/ft²). With the above paint coat, the above scrim itself requires a porosity of higher than 30 m³/min/m² (100 ft³/min/ft²).

## Claims

1. Sound absorbing product comprising a sound absorbing substrate, particularly an acoustical fiberboard, having a visual surface which is capable of absorbing sound with a noise reduction coefficient NCR (ASTM C423-90a) being equal to or greater than 65, and a surface layer on said visual surface consisting of directly applied paint (4) or of an attached non woven scrim (10) covered by applied paint (4) characterized in that said paint (4) consists substantially of latex, water and very small size inert filler particles equal to 325 mesh and finer (going through a sieve opening of 0,044 mm or smaller) which particles have a greater affinity to the water than for the visual surface of the substrate resulting in discrete and individual droplets of the applied paint (4) making the surface layer optically opaque as well as discontinuous and acoustically transparent by having a minimum porosity of not less than 15 to 23 m³/min/m² (50 to 75 ft³/min/ft²) and providing a plain fine textured product.

2. Sound absorbing product according to claim 1, characterized in that the very small size inert filler particles are selected from the group consisting of limestone, silica, perlite and titanium dioxide particles.

3. Sound absorbing product according to claim 1 or 2, characterized in that the paint is a high solids/low liquid suspension having up to about 72% solids by weight.

4. Sound absorbing product according to one of the preceding claims, characterized in that the paint has a viscosity of about 3 to 9 Pa s.

5. Sound absorbing product according to one of the preceding claims, characterized in that the paint application rates are 324 to 650 g/m² (30 to 60 g/ft²) .

## Patentansprüche

1. Schallabsorbierendes Erzeugnis
- mit einem schallabsorbierenden Substrat, insbesondere einer schallschluckenden Faserplatte, das eine Sichtfläche hat, die in der Lage ist, Schall mit einem Schallabsorptionskoeffizienten NCR (ASTM C423-90a) zu absorbieren, der gleich oder größer als 65 ist, und
- mit einer Oberflächenschicht auf der Sichtfläche, die aus direkt aufgebrachter Farbe (4) oder aus einem befestigten lockeren Gelegevlies (10) besteht, das von aufgebrachter Farbe (4) bedeckt ist,
dadurch gekennzeichnet,
- daß die Farbe (4) im wesentlichen aus Latex, aus Wasser oder aus inerten Füllstoffteilchen mit sehr kleiner Größenabmessung besteht, die 325 mesh und weniger entspricht (die durch eine Sieböffnung von 0,044 mm oder weniger hindurchgehen),
- wobei die Teilchen eine größere Affinität zu Wasser als für die Sichtfläche des Substrats haben, was zu diskreten und einzelnen Tröpfchen der aufgebrachten Farbe (4) führt, was die Oberflächenschicht optisch undurchsichtig sowie diskontinuierlich und akustisch transparent macht, indem sie eine minimale Porosität von nicht weniger als 15 bis 23 m³/min/m² (50 bis 75 ft³/min/ft²) hat und ein ebenes, feines, texturiertes Erzeugnis bildet.

2. Schallabsorbierendes Erzeugnis nach Anspruch 1, dadurch gekennzeichnet, daß die inerten Füllstoffteilchen mit sehr kleiner Größenabmessung aus der Gruppe ausgewählt sind, die aus Kalk-, Siliziumdioxid-, Perlit-, und Titandioxidteilchen besteht.

3. Schallabsorbierendes Erzeugnis nach Anspruch 1 oder 2, dadurch gekennzeichnet, daß die Farbe eine Suspension mit hohem Feststoffgehalt und niedrigem Flüssigkeitsgehalt ist, die bis zu etwa 72 Gewichtsprozent Feststoffe hat.

4. Schallabsorbierendes Erzeugnis nach einem der vorhergehenden Ansprüche, dadurch gekennzeichnet, daß die Farbe eine Viskosität von etwa 3 bis 9 Pa s hat.

5. Schallabsorbierendes Erzeugnis nach einem der vorhergehenden Ansprüche, dadurch gekennzeichnet, daß die Farbenaufbringmengen 324 bis 650 g/m² (30 bis 60 g/ft²) betragen.

## Revendications

1. Produit absorbant les sons comportant un substrat absorbant les sons, particulièrement un panneau de fibres acoustique présentant une surface visible qui est capable d'absorber les sons avec un coefficient de réduction du bruit (NCR suivant ASTM CA23-90a) égal ou supérieur à 65 et une couche en surface sur ladite surface visible consistant en une peinture (4) appliquée directement ou en une mousseline (10) non tissée, attachée et recouverte de peinture appliquée (4), caractérisé en ce que ladite peinture (4) consiste essentiellement en latex, eau et particules de matières de charge inertes de très petites dimensions correspondant à une maille de 325 ou plus fine (passant à travers une ouverture de tamis de 0,044 mm ou inférieure), ces particules ayant une affinité plus grande pour l'eau que pour la surface visible du substrat, ceci se traduisant par des gouttelettes discrètes et individuelles de la peinture appliquée (4), ce qui rend la couche en surface opaque du point de vue optique en même temps que discontinue et transparente du point de vue acoustique en présentant une porosité minimale pas inférieure à 15 à 23 m³/mn/m² (50 à 75 ft³/min/ft²) et en fournissant un produit uni à texture fine.

2. Produit absorbant les sons selon la revendication 1, caractérisé en ce que les particules de matières de charge inertes de très petites dimensions sont choisies dans un groupe constitué par des particules de calcaire, de silice, de perlite et de dioxyde de titane.

3. Produit absorbant les sons selon la revendication 1 ou 2, caractérisé en ce que cette peinture est une suspension à haute teneur en matières solides et à faible teneur en liquide, présentant jusqu'à 72% de matières solides en poids.

4. Produit absorbant les sons selon l'une des revendications précédentes, caractérisé en ce que cette peinture présente une viscosité d'environ 3 à 9 Pa s.

5. Produit absorbant les sons selon l'une des revendications précédentes, caractérisé en ce que la quantité d'application de cette peinture est de 324 à 650 g/m² (30 à 60 g/ft²).
